(19) Europäisches Patentamt
European Patent Office
Office européen des brevets

(11) **EP 1 881 409 A1**

(12) **EUROPÄISCHE PATENTANMELDUNG**

(43) Veröffentlichungstag:
**23.01.2008 Patentblatt 2008/04**

(51) Int Cl.:
*G06F 11/26* *(2006.01)*

(21) Anmeldenummer: **06014922.6**

(22) Anmeldetag: **18.07.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(71) Anmelder: **SIEMENS AKTIENGESELLSCHAFT 80333 München (DE)**

(72) Erfinder:
• **Brüll, Martin 93092 Barbing (DE)**
• **Burger, Thomas, Dr. 93051 Regensburg (DE)**

(54) **Rapid Prototyping Einheit**

(57)     Es wird eine Motorsteuerung mit zumindest zwei Steuermodulen vorgeschlagen, die aufweist:
ein erstes Steuermodul, welches eine erste Speichereinheit die zumindest Steuerungsdaten speichert, zumindest eine erste Funktionseinheit, welche die Steuerungsdaten neu berechnet, und zumindest eine zweite Funktionseinheit aufweist, welche die in der ersten Speichereinheit gespeicherten Steuerungsdaten mit den neu berechneten Steuerungsdaten überschreibt; eine Datenübertragungseinheit, welche das erste Steuermodul zumindest mit einem zweiten Steuermodul zum Übertragen von Daten koppelt;
das zweite Steuermodul, welches eine dritte Funktionseinheit, die die in der ersten Speichereinheit gespeicherten Steuerungsdaten über die Datenübertragungseinheit lädt und in einer zweiten Speichereinheit speichert, die zweite Speichereinheit, welche neben den in dem aktuellen Ladeintervall geladenen Steuerungsdaten zumindest die in einem vorhergehenden Ladeintervall geladenen Steuerungsdaten speichert; und
eine vierte Funktionseinheit, welche die aktuellen Steuerungsdaten zumindest mit den vorhergehenden Steuerungsdaten mittels eines Vergleichskriteriums vergleicht und abhängig davon ein Vergleichsergebnis bereitstellt, wobei das zweite Steuermodul zumindest eine fünfte Funktionseinheit aufweist, welche Ergebnisdaten in Abhängigkeit des Vergleichsergebnisses mittels der in dem aktuellen Ladeintervall geladenen Steuerungsdaten berechnet.

FIG 1

EP 1 881 409 A1

**Beschreibung**

Die Erfindung betrifft eine Motorsteuerung zum Steuern eines Motors mittels zumindest zwei Steuermodulen.

Die Steuerung der vielfältigen und komplexen Prozesse in modernen Verbrennungskraftmaschinen zählt zu den bedeutendsten Anwendungsbereichen der Mikroelektronik. Dabei spielen beispielsweise die Regelung der elektronischen Zündsysteme und der Leerlauf-Drehzahl sowie die Lambda-Regelung eine herausragende Rolle. Die Steuermodule, welche einzelne Funktionen der Motorsteuerung zur aktiven Motorregelung und zur adaptiven Getrieberegelung bereitstellen, sind wesentliche Mittel zur Anpassung der Systeme an die jeweiligen Fahrsituationen.

Bei der Entwicklung von neuen Funktionen oder neuen Steuermodulen für die Motorsteuerung (ECU, Electronic Control Unit) wird häufig die so genannte Rapid-Prototyping-Methode (RPT, Rapid Prototyping) eingesetzt. Dabei wird eine alte Funktionalität der Motorsteuerung, beispielsweise zur Berechnung von Ergebnisdaten in Abhängigkeit von vorbestimmten Parametern, insbesondere in Abhängigkeit von Steuerungsdaten eines anderen Steuermoduls, über einen funktionellen Bypass, wie eine Datenübertragungseinheit, überbrückt. Eine neue Version dieser Funktionalität wird auf der Rapid-Prototyping-Einheit (RPU, Rapid Prototyping Unit) durch ein neues Steuermodul berechnet und deren Ergebnisse werden anstelle der Ergebnisse des alten Steuermoduls in die Motorsteuerung eingespeist. Die neue Version der Funktionalität bzw. das neue Steuermodul benötigt die Input-Parameter von der Motorsteuerung, insbesondere Steuerungsdaten, die von dem anderen Steuermodul berechnet wurden.

Die Berechnung der neuen Funktion im funktionellen Bypass belastet allerdings den Prozessor der Rapid-Prototyping-Einheit. Die Dauer dieser Berechnung bedingt im Wesentlichen die Verzögerung, mit welcher der funktionelle Bypass durchgeführt wird, und resultiert daher in einer Wartezeit für die Electronic Control Unit, um auf die Ergebnisse der Rapid-Prototyping-Einheit zu warten. Diese herkömmliche, ineffiziente Nutzung des Prozessors der Rapid-Prototyping-Einheit bedingt deutliche Beschränkungen bei den darstellbaren Funktionsumfängen auf der Rapid-Prototyping-Einheit und führt außerdem zu deutlichen Laufzeitbelastungen auf den Steuermodulen.

Der Anmelderin sind intern folgende Ansätze eines Einsatzes einer Rapid-Prototyping-Einheit bekannt:

Bei einem ersten Ansatz werden alle Bypass-Funktionalitäten auf der Rapid-Prototyping-Einheit immer gerechnet. Dies hat den Nachteil, dass zum einen hohe technische Anforderungen an den Prozessor der Rapid-Prototyping-Einheit gestellt werden müssen, was sich in hohen Kosten für die Rapid-Prototyping-Einheit wiederspiegelt, oder dass der Prozessor unnötig stark beansprucht wird und es dadurch häufig zu einem deutlichen zeitlichen Verzug des funktionellen Bypasses kommt. Letzteres kann folgende Nachteile bedingen: Wartet die Electronic Control Unit auf das Ergebnis der Rapid-Prototyping-Einheit, so kommt es zu einer deutlichen Verzögerung oder einer Unterbrechung ihrer Steuerfunktion oder Steuerfunktionen. Wartet die Electronic Control Unit nicht auf das Ergebnis der Rapid-Prototyping-Einheit, kann es zu Dateninkonsistenzen und / oder Funktionsinkonsistenzen auf der Electronic Control Unit kommen.

Bei einem zweiten Ansatz schränkt der zuständige Entwickler den funktionalen Umfang der Bypass-Funktionalität auf der Rapid-Prototyping-Einheit deutlich ein, was einen negativen Einfluss dieser Rapid-Prototyping-Methode für die Entwicklungsprozess hat, da somit umfangreichere oder komplexere Funktionalitäten auf der Rapid-Prototyping-Einheit nicht mehr darstellbar sind.

Bei einem dritten Ansatz schränkt der Entwickler die Anforderungen an die Datenkonsistenz der Ergebnisse der Rapid-Prototyping-Einheit ein. Ein solches Einschränken der Datenkonsistenz kann beispielsweise dadurch vorgenommen werden, dass die Electronic Control Unit nicht auf die Ergebnisse der Rapid-Prototyping-Einheit wartet oder dadurch, dass der funktionale Bypass in größeren Zeitintervallen durchgeführt wird, als dessen Ergebnis von der Electronic Control Unit funktional benötigt werden würde. Bei diesem dritten Ansatz ergibt sich allerdings der Nachteil, dass durch die Reduzierung des Empfangens der Ergebnisse von der Rapid-Prototyping-Einheit häufig mit veralteten und damit mit meist falschen Daten auf der Electronic Control Unit gerechnet wird.

Außerdem muss diese Problematik auch über das Anwendungsgebiet des Rapid-Prototyping hinausgesehen werden, da die ineffiziente Nutzung der Neuberechnung von Ergebnisdaten auch bei verschiedenen Steuermodulen der Motorsteuerung selbst existiert. Des Weiteren ergibt sich diese Problematik ebenfalls bei Personalcomputern oder anderen elektronischen Steuereinrichtungen.

Eine Aufgabe der vorliegenden Erfindung besteht daher darin, die Berechnungshäufigkeit einer Neuberechnung von einem ersten Steuermodul zu bereitstellenden Ergebnisdaten durch ein zweites Steuermodul zu reduzieren oder zu minimieren.

Eine weitere Aufgabe ist es sicherzustellen, dass das erste Steuermodul, das die von dem zweiten Steuermodul berechneten Ergebnisdaten als Eingangsparameter verwendet, stets die aktuellen Ergebnisdaten des zweiten Steuermoduls hat.

Erfindungsgemäß wird zumindest eine dieser gestellten Aufgaben durch eine Steuerung mit den Merkmalen des Patentanspruchs 1 und/oder durch ein Computerprogramm mit den Merkmalen des Patentanspruchs 21 und/oder durch einen Datenträger mit den Merkmalen des Patentanspruchs 22 und/oder durch ein Computerprogramm-Produkt mit den Merkmalen des Patentanspruchs 23 gelöst.

Demgemäß wird eine Steuerung, insbesondere eine Motorsteuerung zum Steuern eines Motors mittels zumindest zwei Steuermodulen vorgeschlagen, die aufweist:

ein erstes Steuermodul, welches eine erste Speichereinheit die zumindest Steuerungsdaten speichert, zumindest eine erste Funktionseinheit, welche die Steuerungsdaten jeweils innerhalb eines Berechnungsintervalls neu berechnet, und zumindest eine zweite Funktionseinheit aufweist, welche nach Ablauf des Berechnungsintervalls die in der ersten Speichereinheit gespeicherten Steuerungsdaten mit den neu berechneten Steuerungsdaten überschreibt;

eine Datenübertragungseinheit, welche das erste Steuermodul zumindest mit einem zweiten Steuermodul zum Übertragen von Daten, insbesondere der Steuerungsdaten, koppelt;

das zweite Steuermodul, welches eine dritte Funktionseinheit, die jeweils nach Ablauf eines Ladeintervalls die in der ersten Speichereinheit gespeicherten Steuerungsdaten über die Datenübertragungseinheit lädt und in einer in dem zweiten Steuermodul angeordneten zweiten Speichereinheit speichert, die zweite Speichereinheit, welche neben den in dem aktuellen Ladeintervall geladenen Steuerungsdaten zumindest die in einem vorhergehenden Ladeintervall geladenen Steuerungsdaten speichert; und

eine vierte Funktionseinheit, welche die in dem aktuellen Ladeintervall geladenen Steuerungsdaten zumindest mit den in dem vorhergehenden Ladeintervall geladenen Steuerungsdaten mittels eines Vergleichskriteriums vergleicht und abhängig davon ein Vergleichsergebnis bereitstellt, wobei das zweite Steuermodul weiter zumindest eine fünfte Funktionseinheit aufweist, welche Ergebnisdaten in Abhängigkeit des Vergleichsergebnisses jeweils nach Ablauf des Ladeintervalls mittels der in dem aktuellen Ladeintervall geladenen Steuerungsdaten berechnet.

Die erfinderische Idee liegt im Wesentlichen darin, die Ergebnisdaten nur dann neu zu berechnen, wenn eine vorbestimmte, signifikante Veränderung der Inputdaten, nämlich der Steuerungsdaten, vorliegt. Stellt die vierte Funktionseinheit fest, dass keine signifikante Veränderung der Inputdaten vorliegt, so werden die Ergebnisdaten nicht neu berechnet und es werden die bereits berechneten Ergebnisdaten, die in der zweiten Speichereinheit abgespeichert sind, als aktuelle Ergebnisdaten an beispielsweise das zweite Steuermodul übertragen. Somit wird der Prozessor des zweiten Steuermoduls nicht unnötig belastet. Dadurch wird zum einen Energie auf dem zweiten Steuermodul eingespart und die Laufzeitbelastung, welche zumindest eine Prozessorbelastung und/oder eine Wartezeit oder Latenzzeit beinhaltet, des ersten Steuermoduls, beispielsweise einem Motorsteuergerät, und des zweiten Steuermoduls, beispielsweise einer Rapid-Prototyping-Einheit, kann erheblich vermindert werden. Somit können Motorsteuergeräte ohne eine zusätzliche Hardware-Erweiterung mehr Funktionalitäten bewältigen bzw. die Rapid-Prototyping-Einheiten können für die Entwicklung umfangreicherer Funktionalitäten verwendet werden. Dadurch, dass die Ergebnisdaten, die von dem zweiten Steuermodul geliefert werden, stets aktuell sind und unnötige Neuberechnungen auf dem zweiten Steuermodul eingespart werden, ist die vorgeschlagene Lösung sehr effizient und garantiert zusätzlich einen zumindest ausreichend hohen Grad an Datenkonsistenz oder absolute Datenkonsistenz.

Vorteilhafte Ausgestaltungen und Weiterbildungen der Erfindung ergeben sich aus den Unteransprüchen sowie der Beschreibung und der Bezugnahme auf die Zeichnungen.

Gemäß einer bevorzugten Weiterbildung der Erfindung weist das zweite Steuermodul eine dritte Speichereinheit auf, welche die von der fünften Funktionseinheit berechneten Ergebnisdaten speichert. Vorteilhafterweise werden die berechneten Ergebnisdaten in dem zweiten Steuermodul gespeichert, so dass auch zum nächsten Übertragungsintervall der Ergebnisdaten an das erste Steuermodul aktuelle Ergebnisdaten bereitstehen, falls das Vergleichsergebnis aussagt, dass keine Neuberechnung von Ergebnisdaten durchgeführt werden soll.

Gemäß einer weiteren bevorzugten Weiterbildung weist das zweite Steuermodul eine sechste Funktionseinheit auf, welche die in der dritten Speichereinheit gespeicherten Ergebnisdaten jeweils nach Ablauf eines Übertragungsintervalls mittels der Übertragungseinheit an das erste Steuermodul überträgt.

Gemäß einer bevorzugten Ausgestaltung der Erfindung, ist das Vergleichsergebnis als ein Anzeigeflag und/ oder ein Gewichtungswert, der zumindest ein Bit, bevorzugt mindestens zwei Bits beinhaltet, ausgebildet. Die Ausbildung als Anzeigeflag hat den Vorteil, dass sie sehr einfach und damit kostengünstig ist. Zur Überprüfung einer notwendigen Neuberechnung der Ergebnisdaten ist somit nur ein einziges Bit, das Anzeigeflag, zu überprüfen. Der Gewichtungswert als Ausbildung des Vergleichsergebnisses hat den Vorteil, denjenigen fünften Funktionseinheiten, die die Steuerungsdaten des ersten Steuermoduls als Eingangsparameter für die Berechnung von Ergebnisdaten nutzen, eine Information über den Umfang der Änderungen der Steuerungsdaten zu geben. In Abhängigkeit des Gewichtungswertes kann dann jede die Steuerungsdaten nutzende fünfte Funktionseinheit eine eigene Entscheidung für eine Neuberechnung treffen.

Gemäß einer weiteren bevorzugten Ausgestaltung ist das Vergleichskriterium als ein Vergleich der in dem aktuellen Ladeintervall geladenen Steuerungsdaten mit den in dem vorgehenden Ladeintervall geladenen Steuerungsdaten an zumindest einer vorbestimmten Bitstelle ausgebildet, wobei die vierte Funktionseinheit abhängig von dem Vergleich ein Abweichungsdatum setzt, welches zumindest ein Bit, bevorzugt mindestens zwei Bits, aufweist, die einen Abweichungswert ausbilden und abhängig von dem Abweichungswert des gesetzten Abweichungsdatums das Vergleichsergebnis bereitstellt. Vorzugsweise setzt die vierte Funktionseinheit den Gewichtungswert in Abhängigkeit des Abweichungswertes. Der Gewichtungswert ermöglicht es - wie oben bereits ausgeführt - basierend auf denselben Steuerungsdaten die Entscheidung der Datenkonsistenz für verschiedene konsumierende fünfte Funktionseinheiten unabhängig voneinander zu handhaben.

Gemäß einer weiteren bevorzugten Ausgestaltung weist das erste Steuermodul eine Anzahl N1 erster Funktionseinheiten und eine Anzahl N2 zweiter Funktionseinheiten auf, welche nach Ablauf des Berechnungsintervalls eine Anzahl N3 von Steuerungsdaten bereitstellen.

Gemäß einer weiteren bevorzugten Ausgestaltung ist das Vergleichskriterium eine erste Funktion, welche von der Anzahl N in dem aktuellen Ladeintervall geladenen Steuerungsdaten und von der Anzahl N3 in dem vorhergehenden Ladeintervall geladenen Steuerungsdaten abhängig ist.

Gemäß einer weiteren bevorzugten Ausgestaltung speichert die zweite Speichereinheit jeweils die von der Anzahl N1 der ersten Funktionseinheiten und der Anzahl N2 der zweiten Funktionseinheiten bereitgestellten und zum jeweiligen Ladeintervall geladene Anzahl N3 von Steuerungsdaten als eine N3 x t Steuerungsdaten-Matrix, wobei t die Anzahl der zu speichernden Ladeintervalle bezeichnet.

Gemäß einer weiteren bevorzugten Ausgestaltung ist das Vergleichskriterium eine zweite Funktion, welche von der Steuerungsdaten-Matrix abhängig ist.

Gemäß einer weiteren bevorzugten Ausgestaltung weist das zweite Steuermodul eine Anzahl N von fünften Funktionseinheiten auf, welche eine Anzahl N von Ergebnisdaten in Abhängigkeit des Vergleichsergebnisses jeweils nach Ablauf des Ladeintervalls der in dem aktuellen Ladeintervall geladenen Steuerungsdaten berechnen.

Gemäß einer weiteren bevorzugten Ausgestaltung speichert die zweite Speichereinheit die jeweils nach Ablauf des Ladeintervalls berechnete Anzahl N von Berechnungsdaten als eine N x t Ergebnisdaten-Matrix, wobei t die Anzahl der zu speichernden Ladeintervalle bezeichnet.

Gemäß einer weiteren bevorzugten Ausgestaltung ist das Vergleichskriterium eine dritte Funktion, die von der Steuerungsdaten-Matrix und/oder von der Ergebnisdaten-Matrix abhängig ist.

Gemäß einer weiteren bevorzugten Ausgestaltung ist das Vergleichskriterium als ein adaptiver Lernalgorithmus ausgebildet, der dazu geeignet ist zu lernen, ob geladene Steuerungsdaten eine vorbestimmte Änderung der Ergebnisdaten bewirken.

Gemäß einer weiteren bevorzugten Ausgestaltung ist die vorbestimmte Änderung als ein Schwellwert oder als ein Schwellwertvektor ausgebildet.

Gemäß einer weiteren bevorzugten Ausgestaltung ist der adaptive Lernalgorithmus durch ein neuronales Netz ausgebildet.

Gemäß einer weiteren bevorzugten Ausgestaltung ist das erste Steuermodul in einer Motorsteuerung und das zweite Steuermodul in einer Rapid-Prototyping-Einheit angeordnet oder das erste Steuermodul und das zweite Steuermodul sind in der Motorsteuerung angeordnet oder das erste Steuermodul und das zweite Steuermodul sind in der Rapid-Prototyping-Einheit angeordnet.

Gemäß einer weiteren bevorzugten Weiterbildung ist das erste Steuermodul als ein erstes computerimplementiertes Programmcode-Mittel und /oder das zweite Steuermodul als ein zweites computerimplementiertes Programmcode-Mittel ausgebildet.

Gemäß einer weiteren bevorzugten Ausgestaltung besteht die Steuerung aus zumindest einer Hardware- und/oder aus zumindest einer Software-Einheit.

Gemäß einer weiteren bevorzugten Weiterbildung ist eine vierte Speichereinheit vorgesehen, welche eine Nachschlagtabelle speichert, die berechnete Ergebnisdaten mit den entsprechenden als Grundlage der Berechnung dienenden Steuerungsdaten verknüpft. Somit werden bereits vorgekommene Inputwerte, die Steuerungsdaten, zusammen mit den resultierenden Outputwerten, den Ergebnisdaten, gespeichert. Durch eine auf diese Weise dynamisch angelegte Nachschlagtabelle (Look-up-Table) wird im Folgenden eine Neuberechnung von bereits ermittelten Ergebnisdaten eingespart, was ebenfalls zu Laufzeitoptimierungen führt.

Gemäß einer weiteren bevorzugten Ausgestaltung beinhaltet das zweite Steuermodul die vierte Funktionseinheit.

Gemäß einer weiteren bevorzugten Ausgestaltung ist das erste Steuermodul als ein erstes computerimplementiertes Programmcode-Mittel und/oder das zweite Steuermodul als ein zweites computerimplementiertes Programmcode-Mittel ausgebildet.

Weiterhin wird ein Computerprogramm mit den oben beschriebenen ersten und zweiten computerimplementierten Programmcode-Mitteln vorgeschlagen, das auf einem computerlesbaren Datenträger gespeichert ist.

Des Weiteren wird ein Datenträger vorgeschlagen, auf dem eine Datenstruktur gespeichert ist, welche das erste computerimplementierte Programmcode-Mittel und das zweite computerimplementierte Programmcode-Mittel, wie oben erläutert, verkörpert und nach einem Laden in einen Arbeits- und/oder Arbeitsspeicher eines Computers oder eines Microcontrollers das erste Steuermodul und das zweite Steuermodul bereitstellt.

Außerdem wird ein Computerprogramm-Produkt mit den auf einem maschinenlesbaren Träger gespeicherten, computerimplementierten Programmcode-Mitteln, wie oben erläutert, vorgeschlagen, um das erste Steuermodul und das zweite Steuermodul bereitzustellen, wenn das Computerprogramm-Produkt auf einem Computer oder auf einem Microcontroller ausgeführt wird.

Die Erfindung wird nachfolgend anhand der in den schematischen Figuren angegebenen Ausführungsbeispielen näher erläutert. Es zeigen:

Fig. 1 ein schematisches Blockschaltbild eines ersten Ausführungsbeispiels der erfindungsgemäßen Steuerung; und

Fig. 2 ein schematisches Blockschaltbild eines zweiten Ausführungsbeispiels der erfindungsgemäßen Steuerung.

In allen Figuren sind gleiche bzw. funktionsgleiche Elemente und Einheiten - sofern nichts anderes angegeben ist - mit denselben Bezugszeichen versehen worden.

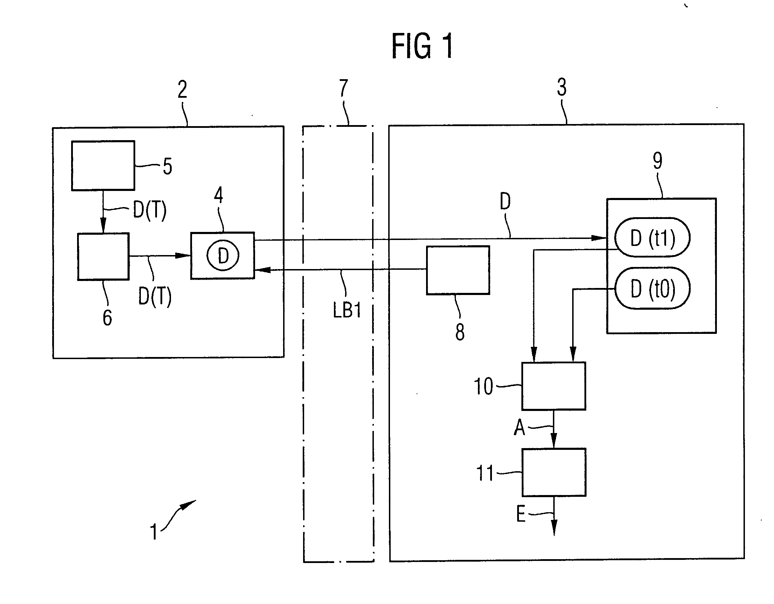

Figur 1 zeigt ein schematisches Blockschaltbild eines ersten Ausführungsbeispiels der erfindungsgemäßen Steuerung 1 zum Steuern eines Motors mittels zumindest zwei Steuermodulen 2,3. Die Steuerung 1 weist ein erstes Steuermodul 2, eine Datenübertragungseinheit 7 und ein zweites Steuermodul 3 auf. Das erste Steuermodul 2 weist eine erste Speichereinheit 4, zumindest eine erste Funktionseinheit 5 und zumindest eine zweite Funktionseinheit 6 auf. Die erste Speichereinheit 4 speichert zumindest Steuerungsdaten D. Die erste Funktionseinheit 5 berechnet die Steuerungsdaten D(T) jeweils innerhalb eines Berechnungsintervalls T neu. Die zweite Funktionseinheit 6 überschreibt die in der ersten Speichereinheit 4 gespeicherten Steuerungsdaten D mit den neu berechneten Steuerungsdaten D(T) nach Ablauf des Berechnungsintervalls T. Die Datenübertragungseinheit 7 koppelt das erste Steuermodul 2 zumindest mit einem zweiten Steuermodul zum Übertragen von Daten, insbesondere der Steuerungsdaten D.

Das zweite Steuermodul 3 weist eine dritte Funktionseinheit 8, eine zweite Speichereinheit 9, eine vierte Funktionseinheit 10 und zumindest eine fünfte Funktionseinheit 11 auf. Die dritte Funktionseinheit 8 lädt jeweils nach Ablauf eines Ladeintervalls t0, t1, die in der ersten Speichereinheit 4 gespeicherten Steuerungsdaten D über die Datenübertragungseinheit 7 und speichert diese in der zweiten Speichereinheit 9. Beispielsweise triggert die dritte Funktionseinheit 8 das Laden der Steuerungsdaten mittels eines Ladebefehls LB1.

Die zweite Speichereinheit 9 speichert neben den in dem aktuellen Ladeintervall t1 geladenen Steuerungsdaten D(t1) zumindest die in einem vorhergehenden Ladeintervall t0 geladenen Steuerungsdaten D(T0) .

Die vierte Funktionseinheit 10 vergleicht die in dem aktuellen Ladeintervall t1 geladenen Steuerungsdaten D(t1) zumindest mit den in dem vorhergehenden Ladeintervall t0 geladenen Steuerungsdaten D(t0) mittels eines vorbestimmten Vergleichskriteriums und stellt abhängig davon ein Vergleichsergebnis bereit.

Die fünfte Funktionseinheit 11 berechnet Ergebnisdaten E(t1) in Abhängigkeit des Vergleichsergebnisses A jeweils nach Ablauf des Ladeintervalls t1 mittels der in dem aktuellen Ladeintervall geladenen Steuerungsdaten D(t1). Das Vergleichsergebnis A kann als ein Anzeigeflag und/oder als ein Gewichtungswert, der zumindest ein Bit, bevorzugt mindestens zwei Bits beinhaltet, ausgebildet sein. Das Vergleichskriterium ist beispielsweise ein Vergleich der in den aktuellen Ladeintervall t1 geladenen Steuerungsdaten D(t1) mit den in dem vorhergehenden Ladeintervall t0 geladenen Steuerungsdaten D(t0) an zumindest einer vorbestimmten Bitstelle. Abhängig von diesem Vergleich setzt die vierte Funktionseinheit 10 ein Abweichungsdatum, welches zumindest ein Bit, bevorzugt mindestens zwei Bit aufweist, die einen Abweichungswert ausbilden. Abhängig von diesem Abweichungswert setzt die vierte Funktionseinheit 10 das Vergleichsergebnis A. Vorzugsweise setzt die vierte Funktionseinheit 10 den Gewichtungswert dann in Abhängigkeit des Abweichungswertes.

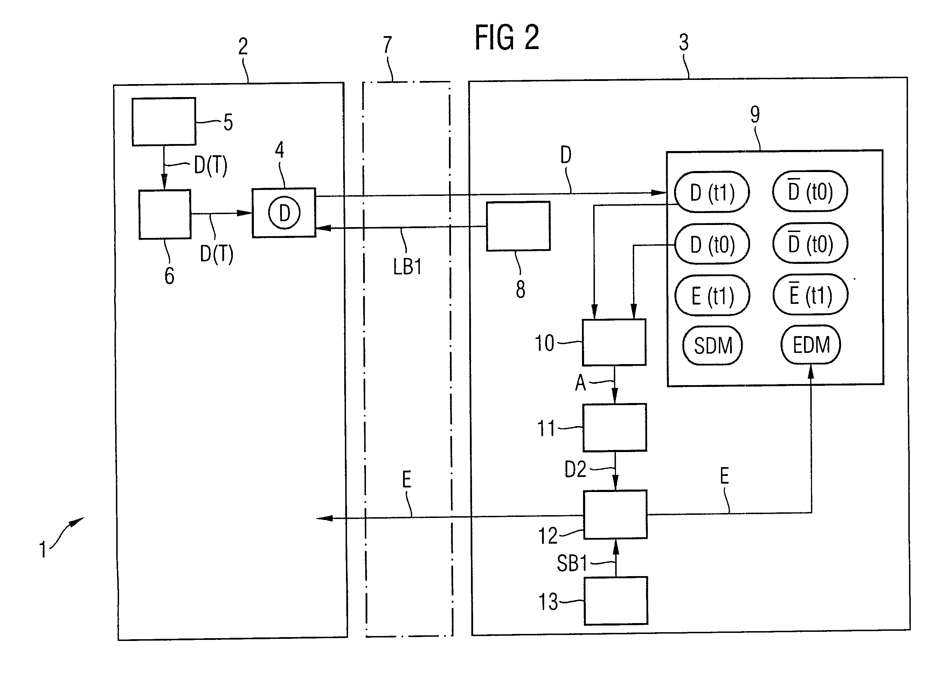

Das folgende zweite Ausführungsbeispiel der Steuerung 1 gemäß der Figur 2 weist sämtliche Merkmale des ersten Ausführungsbeispiels gemäß Figur 1 auf. Darüber hinaus hat das zweite Steuermodul 3 eine dritte Speichereinheit 12, welche die von der dritten Funktionseinheit 12 berechneten Ergebnisdaten E(t1) speichert.

Vorzugsweise weist das zweite Steuermodul weiterhin eine sechste Funktionseinheit 13 auf. Die sechste Funktionseinheit 13 triggert die Übertragung der in der dritten Speichereinheit 12 gespeicherten Ergebnisdaten E(t1) jeweils nach Ablauf eines Übertragungsintervalls mittels eines ersten Schreibbefehls SB1. Die Ergebnisdaten E(t1) werden mittels der Datenübertragungseinheit 7 an das erste Steuermodul 2 übertragen.

Das ersten Steuermodul 2 weist vorzugsweise eine Anzahl N1 erster Funktionseinheiten 5 und eine Anzahl N2 zweiter Funktionseinheiten 6 auf, welche nach Ablauf das Berechnungsinterwalls T eine Anzahl N3 von Steuerungsdaten $\overline{D}$(t0), $\overline{D}$(t1) bereitstellen. Das Vergleichskriterium kann dann als eine erste Funktion f1 ausgebildet sein, welche von der Anzahl N3 in dem aktuellen Ladeintervall t1 geladenen Steuerungsdaten $\overline{D}$(t1) und von der Anzahl N3 in dem vorhergehenden Ladeintervall t0 geladenen Steuerungsdaten $\overline{D}$(t0) abhängig ist:

$$f1 = f(\overline{D}(t1), \overline{D}(t0)) \qquad (1)$$

Vorzugsweise speichert die zweite Speichereinheit 9 jeweils die von der Anzahl N1 der ersten Funktionseinheiten 5 und von der Anzahl N2 der zweiten Funktionseinheiten 6 bereitgestellten und zum jeweiligen Ladeintervall t0, t1 geladene Anzahl N3 von Steuerungsdaten $\overline{D}$(t0), $\overline{D}$(t1) als eine N3 x t Steuerungsdaten-Matrix SDM, wobei t die Anzahl der zu speichernden Ladeintervalle t0, t1 bezeichnet. Dann kann das Vergleichskriterium beispielsweise als eine zweite Funktion f2 ausgebildet sein, welche von der Steuerungsdaten-Matrix SDM abhängt:

$$\texttt{f2 = f(SDM)} \qquad (2)$$

Weiterhin kann das zweite Steuermodul 3 eine Anzahl N von fünften Funktionseinheiten 11 aufweisen, welche eine Anzahl N von Ergebnisdaten $\overline{E}$(t1) in Abhängigkeit des Vergleichsergebnisses A jeweils nach Ablauf des Ladeintervalls t1 mittels der in dem aktuellen Ladeintervall t1 geladenen Steuerungsdaten D(t1), $\overline{D}$(t1) berechnen. Weiterhin kann die zweite Speichereinheit 9 die jeweils nach Ablauf des Ladeintervalls t1 berechnete Anzahl N von Berechnungsdaten $\overline{E}$(t1) als eine N x t Ergebnisdaten-Matrix EDM speichern, wobei t die Anzahl der zu speichernden Ladeintervalle t0, t1 ist. Dann kann das Vergleichskriterium auch als eine dritte Funktion f3 ausgebildet sein, die von der Steuerungsdaten-Matrix SDM und/oder von der Ergebnisdaten-Matrix EDM abhängig ist. Vorzugsweise ist die dritte Funktion f3 von der Steuerungsdaten-Matrix SDM und von der Ergebnisdaten-Matrix EDM abhängig:

$$\texttt{f3 = f(SDM,EDM)} \qquad (3)$$

Das Vergleichskriterium kann auch als ein adaptiver Lernalgorithmus ausgebildet sein, der dazu geeignet ist zu lernen, ob geladene Steuerungsdaten D(t1), $\overline{D}$(t1) eine vorbestimmte Änderung der Ergebnisdaten E(t1), $\overline{E}$(t1) bewirken. Die vorbestimmte Änderung kann beispielsweise als ein Schwellwert oder für E(t1) als ein Schwellwertvektor für $\overline{E}$(t1) ausgebildet sein. Beispielsweise ist der adaptive Lernalgorithmus durch ein neuronales Netz abgebildet. Auch kann das zweite Steuermodul 3 eine vierte Speichereinheit (nicht gezeigt) aufweisen, welche ein Nachschlagtabelle speichert, die berechnete Ergebnisdaten E(t1), $\overline{E}$(t1) mit den entsprechenden zur Berechnung der Ergebnisdaten E(t1), $\overline{E}$(t1) dienenden Steuerungsdaten D(t1), $\overline{D}$(t1) verknüpft.

Obwohl die vorliegende Erfindung vorstehend anhand der bevorzugten Ausführungsbeispiele beschrieben wurde, ist sie darauf nicht beschränkt, sondern auf vielfältige Art und Weise modifizierbar. Beispielsweise ist es denkbar, mehrere Steuermodule vorzusehen, die die Steuerungsdaten empfangen und abhängig davon jeweils ein Vergleichsergebnis berechnen.

**Patentansprüche**

1. Steuerung (1), insbesondere Motorsteuerung, zum Steuern eines Motors mittels zumindest zwei Steuermodulen (2, 3) enthaltend:

   a) ein erstes Steuermodul (2), welches aufweist:

   a1) eine erste Speichereinheit (4), welche zumindest Steuerungsdaten (D) speichert,
   a2) zumindest eine erste Funktionseinheit (5), welche die Steuerungsdaten (D(T)) jeweils innerhalb eines Berechnungsintervalls (T) neu berechnet, und
   a3) zumindest eine zweite Funktionseinheit (6), welche nach Ablauf des Berechnungsintervalls (T) die in der ersten Speichereinheit (4) gespeicherten Steuerungsdaten (D) mit den neu berechneten Steuerungsdaten (D(T)) überschreibt;

   b) eine Datenübertragungseinheit (7), welche das erste Steuermodul (2) zumindest mit einem zweiten Steuermodul (3) zum Übertragen von Daten, insbesondere der Steuerungsdaten (D), koppelt; und
   c) das zweite Steuermodul (3), welches aufweist:

   c1) eine dritte Funktionseinheit (8), welche jeweils nach Ablauf eines Ladeintervalls (t0, t1) die in der ersten Speichereinheit (4) gespeicherten Steuerungsdaten (D) über die Datenübertragungseinheit (7) lädt und in einer in dem zweiten Steuermodul (3) angeordneten zweiten Speichereinheit (9) speichert,
   c2) die zweite Speichereinheit (9), welche neben den in dem aktuellen Ladeintervall (t1) geladenen Steuerungsdaten (D(t1)) zumindest die in einem vorhergehenden Ladeintervall (t0) geladenen Steuerungsdaten (D(t0)) speichert; und

d) eine vierte Funktionseinheit (10), welche die in dem aktuellen Ladeintervall (t1) geladenen Steuerungsdaten (D(t1)) zumindest mit den in dem vorhergehenden Ladeintervall (t0) geladenen Steuerungsdaten (D(t0)) mittels eines Vergleichskriteriums vergleicht und abhängig davon ein Vergleichsergebnis (A) bereitstellt, e) wobei das zweite Steuermodul (3) zumindest eine fünfte Funktionseinheit (11) aufweist, welche Ergebnisdaten (E(t1)) in Abhängigkeit des Vergleichsergebnisses (A) jeweils nach Ablauf des Ladeintervalls (t1) mittels der in dem aktuellen Ladeintervall (t1) geladenen Steuerungsdaten (D(t1)) berechnet.

2. Steuerung nach Anspruch 1,
   **dadurch gekennzeichnet,**
   **dass** das zweite Steuermodul (3) eine dritte Speichereinheit (12) aufweist, welche die von der fünften Funktionseinheit (11) berechneten Ergebnisdaten (E(t1)) speichert.

3. Steuerung nach Anspruch 2,
   **dadurch gekennzeichnet,**
   **dass** das zweite Steuermodul (3) eine sechste Funktionseinheit (13) aufweist, welche die in der dritten Speichereinheit (12) gespeicherten Ergebnisdaten (E(t1)) jeweils nach Ablauf eines Übertragungsintervalls mittels der Datenübertragungseinheit (7) an das erste Steuermodul (2) überträgt.

4. Steuerung nach einem oder mehreren der vorstehenden Ansprüche,
   **dadurch gekennzeichnet,**
   **dass** das Vergleichsergebnis (A) als ein Anzeigeflag und/oder ein Gewichtungswert, der zumindest ein Bit, bevorzugt mindestens zwei Bits, beinhaltet, ausgebildet ist.

5. Steuerung nach Anspruch 4,
   **dadurch gekennzeichnet,**
   **dass** das Vergleichskriterium als ein Vergleich der in dem aktuellen Ladeintervall (t1) geladenen Steuerungsdaten (D(t1)) mit den in dem vorhergehenden Ladeintervall (t0) geladenen Steuerungsdaten (D(t0)) an zumindest einer vorbestimmten Bitstelle ausgebildet ist, wobei die vierte Funktionseinheit (10) abhängig von dem Vergleich ein Abweichungsdatum setzt, welches zumindest ein Bit, bevorzugt mindestens zwei Bits, aufweist, die einen Abweichungswert ausbilden, und abhängig von dem Abweichungswert des gesetzten Abweichungsdatums das Vergleichsergebnis (A) bereitstellt.

6. Steuerung nach Anspruch 5,
   **dadurch gekennzeichnet,**
   **dass** die vierte Funktionseinheit (10) den Gewichtungswert in Abhängigkeit des Abweichungswertes setzt.

7. Steuerung nach einem oder mehreren der Ansprüche 1 bis 6,
   **dadurch gekennzeichnet,**
   **dass** das erste Steuermodul (2) eine Anzahl N1 erster Funktionseinheiten (5) und eine Anzahl N2 zweiter Funktionseinheiten (6) aufweist, welche nach Ablauf des Berechnungsintervalls (T) eine Anzahl N3 von Steuerungsdaten $(\overline{D}(t0))$, $(\overline{D}(t1))$ bereitstellen.

8. Steuerung nach Anspruch 7,
   **dadurch gekennzeichnet,**
   **dass** das Vergleichskriterium eine erste Funktion (f1) ist, welche von der Anzahl N3 in dem aktuellen Ladeintervall (t1) geladenen Steuerungsdaten $(\overline{D}(t1))$ und von der Anzahl N3 in dem vorhergehenden Ladeintervall (t0) geladenen Steuerungsdaten $(\overline{D}(to))$ abhängig ist.

9. Steuerung nach Anspruch 7
   **dadurch gekennzeichnet,**
   **dass** die zweite Speichereinheit (9) jeweils die von der Anzahl N1 der ersten Funktionseinheiten (5) und von der Anzahl N2 der zweiten Funktionseinheiten (6) bereitgestellten und zum jeweiligen Ladeintervall (t0, t1) geladene Anzahl N3 von Steuerungsdaten $(\overline{D}(t0))$, $(\overline{D}(t1))$ als eine N3 x t Steuerungsdaten-Matrix (SDM) speichert, wobei t die Anzahl der zu speichernden Ladeintervalle (t0, t1) bezeichnet.

**10.** Steuerung nach Anspruch 9,
**dadurch gekennzeichnet,**
**dass** das Vergleichskriterium eine zweite Funktion (f2) ist, welche von der Steuerungsdaten-Matrix (SDM) abhängig ist.

**11.** Steuerung nach einem oder mehreren der Ansprüche,
**dadurch gekennzeichnet,**
**dass** das zweite Steuermodul (3) eine Anzahl N von fünften Funktionseinheiten (11) aufweist, welche eine Anzahl N von Ergebnisdaten ($\overline{E}$(t1)) in Abhängigkeit des Vergleichsergebnisses (A) jeweils nach Ablauf des Ladeintervalls (t1) mittels der in dem aktuellen Ladeintervall (t1) geladenen Steuerungsdaten (D(t1)) ; ($\overline{D}$(t1)) berechnen.

**12.** Steuerung nach Anspruch 11,
**dadurch gekennzeichnet,**
**dass** die zweite Speichereinheit (9) die jeweils nach Ablauf des Ladeintervalls (t1) berechnete Anzahl N von Berechnungsdaten ($\overline{E}$(t1)) als eine $N \times t$ Ergebnisdaten-Matrix (EDM) speichert, wobei t die Anzahl der zu speichernden Ladeintervalle (t0, t1) bezeichnet.

**13.** Steuerung nach Anspruch 9 und 12,
**dadurch gekennzeichnet,**
**dass** das Vergleichskriterium eine dritte Funktion (f3) ist, die von der Steuerungsdaten-Matrix (SDM) und/oder von der Ergebnisdaten-Matrix (EDM) abhängig ist.

**14.** Steuerung nach einem oder mehreren der Ansprüche 1 bis 12,
**dadurch gekennzeichnet,**
**dass** das Vergleichskriterium als ein adaptiver Lernalgorithmus ausgebildet ist, der dazu geeignet ist, zu lernen, ob geladene Steuerungsdaten (D(t1)) ;($\overline{D}$(t1)) eine vorbestimmte Änderung der Ergebnisdaten (E(t1) ; ($\overline{E}$(t1)) bewirken.

**15.** Steuerung nach Anspruch 14,
**dadurch gekennzeichnet,**
**dass** die vorbestimmte Änderung als ein Schwellwert oder als ein Schwellwertvektor ausgebildet ist.

**16.** Steuerung nach Anspruch 14 oder 15,
**dadurch gekennzeichnet,**
**dass** der adaptive Lernalgorithmus durch ein neuronales Netz ausgebildet ist.

**17.** Steuerung nach Anspruch 1 oder einen der Ansprüche 2 bis 16,
**dadurch gekennzeichnet,**
**dass** das erste Steuermodul (2) in einer Motorsteuerung und das zweite Steuermodul (3) in einer Rapid-Prototyping-Einheit angeordnet ist oder das erste Steuermodul (2) und das zweite Steuermodul (3) in der Motorsteuerung angeordnet sind.

**18.** Steuerung nach Anspruch 1 oder mehreren der Ansprüche 1 bis 17,
**dadurch gekennzeichnet,**
**dass** das zweite Steuermodul (3) eine vierte Speichereinheit aufweist, welche eine Nachschlagtabelle speichert, die berechnete Ergebnisdaten (E(t1) ; ($\overline{E}$(t1)) mit den entsprechenden zur Berechnung der jeweiligen Ergebnisdaten (E(t1) ; ($\overline{E}$(t1)) dienenden Steuerungsdaten (D(t1); ($\overline{D}$(t1)) verknüpft.

**19.** Steuerung nach Anspruch 1 oder einen der Ansprüche 2 bis 18,
**dadurch gekennzeichnet,**
**dass** das erste Steuermodul (2) als ein erstes computerimplementiertes Programmcode-Mittel und/oder das zweite Steuermodul (3) als ein zweites computerimplementiertes Programmcode-Mittel ausgebildet ist.

**20.** Steuerung nach Anspruch 1 oder einen der Ansprüche 2 bis 19,
**dadurch gekennzeichnet,**
**dass** das zweite Steuermodul (3) die vierte Funktionseinheit (10) beinhaltet.

**21.** Computerprogramm mit dem ersten und zweiten computerimplementierten Programmcode-Mittel nach Anspruch 20, welches auf einem computerlesbaren Datenträger gespeichert ist.

**22.** Datenträger, auf dem eine Datenstruktur gespeichert ist, welche das erste computerimplementierte Programmcode-Mittel und das zweite computerimplementierte Programmcode-Mittel nach Anspruch 20 verkörpert und nach einem Laden in einen Arbeits- und/oder Arbeitsspeicher eines Computers oder eines Microcontrollers das erste Steuermodul (2) und das zweite Steuermodul (3) bereitstellt.

**23.** Computerprogramm-Produkt mit den auf einem maschinenlesbaren Träger gespeicherten computerimplementierten Programmcode-Mitteln nach Anspruch 20, um das erste Steuermodul (2) und das zweite Steuermodul (3) bereitzustellen, wenn das Computerprogramm-Produkt auf einem Computer oder einem Microcontroller ausgeführt wird.

# FIG 1

EP 1 881 409 A1

FIG 2

EP 1 881 409 A1

**Europäisches Patentamt**

**EUROPÄISCHER RECHERCHENBERICHT**

**Nummer der Anmeldung**

EP 06 01 4922

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | AKIHIRO KIMURA, IWAO MAEDA: "Devel. of Engine Control System using Real Time Simulator" PROCEEDINGS OF THE 1996 IEEE, 15. September 1996 (1996-09-15), - 18. September 1996 (1996-09-18) Seiten 157-163, XP002414389 Dearborn, MI, USA * Seite 161 - Seite 162 * ----- | 1 | INV. G06F11/26 |
| A | EP 0 217 571 A2 (FORD MOTOR CO [GB]; FORD WERKE AG [DE]; FORD FRANCE [FR]) 8. April 1987 (1987-04-08) * Seite 10, Zeile 14 - Seite 11, Zeile 9 * * Abbildung 2 * ----- | 1 | |
| A | BARROSO L A ET AL: "RPM: A RAPID PROTOTYPING ENGINE FOR MULTIPROCESSOR SYSTEMS" COMPUTER, IEEE SERVICE CENTER, LOS ALAMITOS, CA, US, Bd. 28, Nr. 2, 1. Februar 1995 (1995-02-01), Seiten 26-34, XP000502736 ISSN: 0018-9162 * das ganze Dokument * ----- | 1 | **RECHERCHIERTE SACHGEBIETE (IPC)** G06F F02D |

Der vorliegende Recherchenbericht wurde für alle Patentansprüche erstellt

| Recherchenort | Abschlußdatum der Recherche | Prüfer |
|---|---|---|
| München | 11. Januar 2007 | De Vita, Diego |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 06 01 4922

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-01-2007

| Im Recherchenbericht angeführtes Patentdokument | Datum der Veröffentlichung | Mitglied(er) der Patentfamilie | | Datum der Veröffentlichung |
|---|---|---|---|---|
| EP 0217571 A2 | 08-04-1987 | CA | 1261935 A1 | 26-09-1989 |
| | | DE | 3667891 D1 | 01-02-1990 |
| | | JP | 6026335 B | 06-04-1994 |
| | | JP | 62068337 A | 28-03-1987 |
| | | US | 4715031 A | 22-12-1987 |

EPO FORM P0461

Für nähere Einzelheiten zu diesem Anhang : siehe Amtsblatt des Europäischen Patentamts, Nr.12/82